Europäisches Patentamt

European Patent Office

Office européen des brevets

(19)

(11) EP 1 455 176 A2

(12) **EUROPEAN PATENT APPLICATION**

(43) Date of publication:
08.09.2004 Bulletin 2004/37

(51) Int Cl.$^7$: **G01N 21/64**

(21) Application number: 04250983.6

(22) Date of filing: 24.02.2004

(84) Designated Contracting States:
**AT BE BG CH CY CZ DE DK EE ES FI FR GB GR HU IE IT LI LU MC NL PT RO SE SI SK TR**
Designated Extension States:
**AL HR LT LV MK**

(30) Priority: 07.03.2003 US 384479

(71) Applicant: Control Devices, Inc.
Standish, Maine 04084-0175 (US)

(72) Inventor: Ehrman, Michael F.
Saco Maine 04072 (US)

(74) Representative: Parkinson, Neil Scott et al
Marks & Clerk,
83-85 Mosley Street,
Sussex House
Manchester M2 3LG (GB)

(54) **Integrated photodetector for heavy metals and biological activity analysis**

(57) An apparatus for measuring the presence of an analyte in a fluid, including a light source adapted to shine an energetic beam of light onto a layer incorporating or in contact with fluorophore-tagged organic molecules. The fluorophore-tagged organic molecules are configured to bind with at least one predetermined analyte to produce at least one organometallic fluorescent compound having at least one characteristic fluorescent wavelength. A photodetector is positioned adjacent the layer of, or surface in contact with, fluorophore-tagged organic molecules to receive fluorescent light excited therefrom. A microprocessor is operationally connected to the light source and to the photodetector. Exposure of the fluorophore-tagged organic molecules to the analyte allows the formation of at least one organometallic fluorescent compound in the layer of fluorophore-tagged organic molecules or in contact with the surface of the layer. The beam of energetic light interacts with the at least one organometallic fluorescent compound to produce fluoresced light and a portion of the fluoresced light is thereby received by the photodetector. The photodetector sends a photodetector signal to the microprocessor proportional to the fluoresced light received. The microprocessor is adapted to identify the presence of the analyte and calculate a concentration of analyte in layer of fluorophore-tagged organic molecules from the photodetector signal.

EP 1 455 176 A2

# Description

## BACKGROUND OF THE INVENTION

Fluorometry is an important quick and nondestructive analytical chemistry technique. Fluorometry is used to acquire both qualitative and quantitative data, and is of great interest for use in analytical chemistry, clinical chemistry and medical diagnostics as a means for measuring unknowns such as the presence and concentration of specific analytes in a solution.

In general, fluorometric analysis involves shining an energetic light onto a sample and stimulating the immediate re-emission or fluorescence of light of a particular frequency from the sample. The frequency of the light so fluoresced is characteristic of the particular sample component fluorescing. The frequency of the light shined onto the sample is usually chosen to be slightly higher than that of the frequency of the light characteristically fluoresced by the sample component desired to be measured. In other words, the fluoresced light has an energy less than or equal to that of the light source, since conservation of energy and the quantum nature of light dictate that the fluoresced photons cannot be more energetic than the excitation photons absorbed to produce the fluoresced photons.

The wavelength of the light fluoresced from a given fluorophore is a characteristic of that compound and can be used to identify the presence of that fluorophore. The intensity of the fluoresced light is proportional to the quantity of the fluorophore. By measuring the wavelength and intensity of the fluoresced light from an unknown sample, the presence and amounts of one or more fluorophores may be determined.

There are some sources of error inherent in fluorescent intensity measurements. These include variations in the intensity of the light source or quantum efficiency of the detector, opacity or scattering characteristics of the sample medium, scattering of light at the interfaces between the sample and light transmission media and between the light transmission and detector media, absorption of the fluoresced light between the sample and the detector, and geometrical differences between the source and the detector. Scattering errors are especially pronounced when measuring hazardous or biological samples, due to the necessary presence of transparent containers that contribute additional light transmission media and interfaces.

It is often desirable to analyze solutions, such as naturally occurring water, well water, water from a municipal water supply, and the like, to determine the presence and concentration of minute quantities of potentially hazardous analytes, such as Resource Conservation and Recovery Act (RCRA) metal contaminants, biological pathogens, or the like. In such cases, it is important to be able to detect concentrations of analytes in the parts per million (PPM) or even the parts per billion (PPB) range. It is also desirable that these measurements be made quickly, and, if possible, in the field.

There are currently available fluorimeters having the resolution and sensitivity to measure analytes in the PPM or PPB ranges, but these devices are generally expensive and too bulky to be readily portable. Further, the use of stationary fluorimeters necessitates the packaging and transportation of potentially hazardous samples. In addition to the potential exposure of one or more people to the hazardous material, the extra steps involved in packaging and transportation add potential for contamination of the samples as well as, in the case of biological pathogens, time degradation of the suspected pathogen. Therefore, a need has arisen for a portable fluorimeter having sufficient resolution to detect analytes in the PPM and/or PPB range. The present invention addresses this need.

## SUMMARY OF THE INVENTION

The present invention relates generally to a fluorescent sensor system for detecting ordinarily non-fluorescent analytes. The sensor system has either a single or a combination of two or more sensors organized as a sensor array. The sensors include potions that may be contacted with a solution potentially containing one or more analytes of interest. Under appropriate conditions, the sensors each provide a fluorescence response to an excitation light that is indicative of one or more analytes of interest.

By exposing several sensors each having a fluorescent material that responds differently to a common sample, additional information about the analyte(s) may be obtained. The contact portions of each of the sensors include a region of one or more types of fluorescence-tagged molecules, or a region that interacts with fluorescence tagged molecule. Each type of fluorescence-tagged molecule is configured to combine with a specific analyte to produce a fluorophore having a predetermined characteristic fluorescent wavelength or color. For example, the fluorescence-tagged molecule may be an organic molecule configured to receive a hexavalent chromium cation to produce a characteristic fluorophore. The fluorescence-tagged molecules are preferably organic, and, in the case of cations, may be made selectively sensitive to both the atomic number and valence state. In other words, the fluorescence-tagged molecule in the above example only forms a fluorophore when combined with chromium, and only then when the chromium is in the +6 valence state.

One object of the present invention is to provide an improved fluorimeter. Related objects and advantages of the present invention will be apparent from the following description.

BRIEF DESCRIPTION OF THE DRAWINGS

FIG. 1 is a schematic view of a first embodiment of the integrated fluorescence detector of the present invention.

FIG. 2 is a partial side elevational view of a probe according to the embodiment of FIG. 1 having a single matrix-detector combination.

FIG. 3 is a partial side elevational view of a probe according to the embodiment of FIG. 1 having multiple matrix-detector combinations.

DETAILED DESCRIPTION OF THE PREFERRED EMBODIMENTS

For the purposes of promoting an understanding of the principles of the invention, reference will now be made to the embodiments illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates.

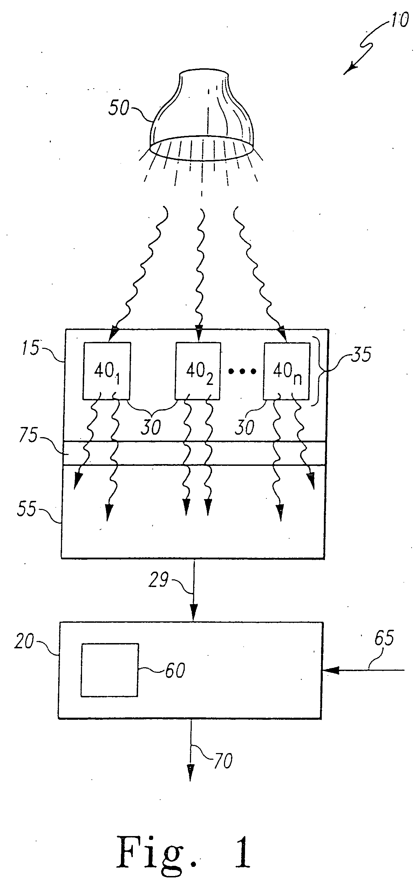

Fig. 1 diagrammatically depicts sensing system 10 of the present invention, a system for performing the fluorescent analysis of fluids, such as liquid solutions and gases, containing various analytes. System 10 includes sensing probe 15 configured to contact fluids containing one or more analytes of interest. Probe 15 is operationally connected to microprocessor 20 such that signals from probe 15 are electrically communicated to microprocessor 20. Preferably, system 10 is configured to remotely locate probe 15 relative to microprocessor 20 via electrical cable 25, although probe 15, may electrically communicate with microprocessor 20 through any convenient means, such as optical cable or via radio frequency signals. In one preferred embodiment, probe 15 is positioned in container that holds the sample to be analyzed.

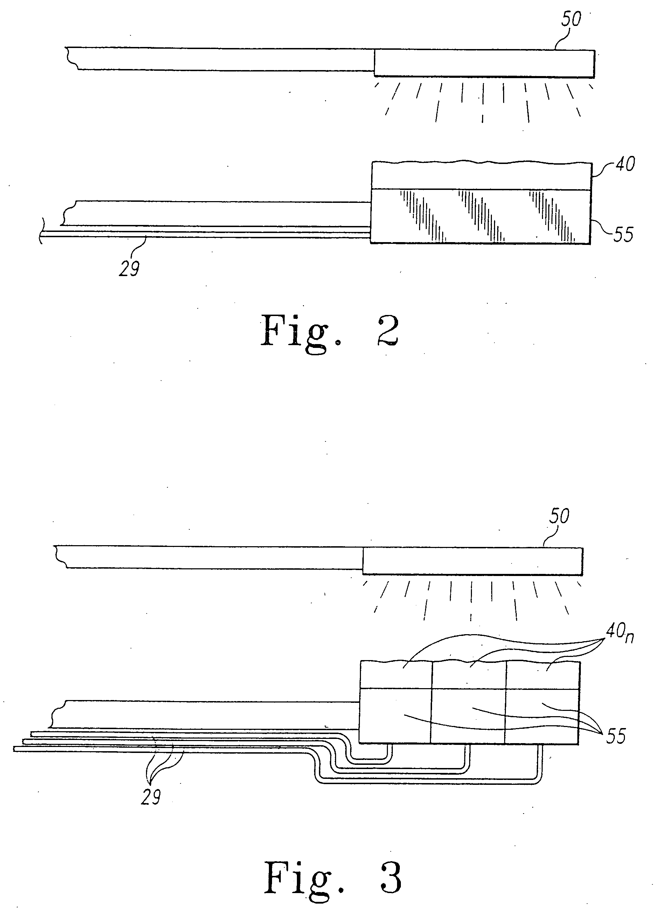

Probe 15 includes one or more sensors 30 positioned thereon, and is shown in greater detail in FIGS. 2 and 3. The sensors 30 are preferably organized as sensor array 35. Generally, sensor array 35 has "n" number of sensors 30 mounted thereon. As depicted, sensors 30 are generally positioned along a straight axis; however, any other convenient arrangements may be utilized as would occur to those skilled in the art. U.S. Patent No. 4,580,059 to Wolfbeis et al. is provided as an additional source of information concerning various multiple sensor structures for fluorometric assessment of samples and is hereby incorporated by reference.

Preferably, sensors 30 each include a different respective fluorescence-tagged sensing material or matrix 40. Alternatively, a single sensor 30 may contain a plurality of different fluorescence-tagged sensing materials in a single matrix. These different materials are individually designated in Fig. 1 by the reference numerals $40_1$, $40_2$, ..., $40_n$ indexed to the integer "n" (generally designated fluorescent materials 40). The depicted ellipsis represents sensors 30 and the different fluorescent materials 40 necessary to provide the "n" number. Each respective fluorescence-tagged material 40 includes molecules configured to produce a fluorophore when combined with a specific analyte molecule, usually a cation of a specific atomic number in a specific valence state. Preferably, fluorescence-tagged materials 40 are selected to facilitate operation of system 10 as a "chemical nose", i.e. a device for analyzing one or more corresponding analytes in solution.

In another embodiment of the invention, sensors 30 each include a material or matrix 40 that interacts with a fluorescence-tagged analyte of interest in the sample. Alternatively, a single sensor 30 may contain a plurality of materials in a single matrix that interact with a plurality of different fluorescence-tagged analytes of interest in a single sample. These different materials are individually designated in Fig. 1 by the reference numerals $40_1$, $40_2$, ..., $40_n$ indexed to the integer "n" (generally designated fluorescent materials 40). The depicted ellipsis represents sensors 30 and the different matrix materials 40 necessary to provide the "n" number. Each respective material 40 in the matrix includes molecules configured to interact with a fluorescence-tagged analyte of interest in the sample when a fluorescent-tag combines with a specific analyte molecule, usually a cation of a specific atomic number in a specific valence state. Preferably, fluorescence-tagged materials are selected to facilitate operation of system 10 as a "chemical nose," i.e. a device for analyzing one or more corresponding analytes in solution that interacts with matrix material 40 that is part of the probe 30.

While it is not intended to limit the present invention to any particular fluorophore-precursor or mechanism, for this preferred fluorophore-tagged material 40 composition, the fluorophore-precursor molecules are organic molecules that coordinate to analytes such as metal ions in an aqueous environment and bind to the metal ions. This mechanism admits a variety of additional fluorophore-precursor molecules that may be combined either in a single sensor 30 or in an array of individual sensors 35, to simultaneously identify and measure a number of different analytes.

The sensor matrices 40 fluoresce when excited or irradiated with radiation at the requisite excitation wavelengths $\lambda_E$. In the case of the preferred organic fluorophore precursor compositions, inclusion of the analyte within the fluorescence-tagged organic molecule sterically and/or electronically perturb the physical conformation and electronic environment of the fluorophore precursor composition. More specifically, the microenvironment within and around the fluorophore precursor is perturbed by the inclusion of the analyte such that the fluorophore precursor becomes a true fluorophore having a fluorescence response and a Maximum Emission Wavelength (MEW). A unique fluorescence response and/or MEW is generated based upon the unique perturbations caused by the analyte association with the fluorophore precursor composition.

One way to quantitize the fluorescence response of a given one of materials 40 is to provide a spectrum for different analytes in terms of ΔF as determined from formula (1) as follows:

$$\Delta F = 1 - I/I_0; \qquad (1)$$

where, I and $I_0$ are the measured fluorescent emission at the MEW for the fluorophore-analyte complex and for the analyte free fluorescence-tagged molecule, respectively. Quantitative analysis of an unknown analyte may be done if such variables as the matrix thickness and optical properties, the exposure time of the analyte to the matrix, the transport kinetics of the analyte in the solution and in the matrix, the reaction kinetics of the analyte with the fluorescence precursor and the intensity of the excitation source are known and accounted for. Alternatively, the fluorescent intensity of the fluorophore-analyte complex so formed may be compared to that of one or more test standards likewise fluoresced to make a quantitative measurement of the test analyte.

While in some instances a single sensor 30 may not provide a sufficiently unique response to a mixture of analytes, a sensing array 35 containing several sensors 30 each having a different fluorescent material 40 provides a correspondingly enhanced fluorescence response pattern useful to analyze the mixture. Each analyte or mixture of analytes provides a unique fluorescence response or pattern of responses when placed in contact with sensor array 35 and exposed to appropriate excitation radiation. The responses are a function of the individual analyte(s) as well as the concentration of the analyte(s). Thus, a sensor array 35 having a plurality of different fluorophore. compositions may be used to identify and quantify individual analytes that are components of a complex mixture of analytes.

Specific examples of metal ions that can be analyzed using the present invention include but are not limited to iron, copper, chromium, manganese, zinc, lead, zirconium, molybdenum, palladium, cadmium, tin, titanium, platinum, gold, silver (i.e., the RCRA metals) and mixtures thereof. Likewise, organisms such as bacteria, molds, fungi, single celled eukaryotes, yeast, and the like may be detected using similar fluorophore precursor preparations or stains configured to bond to the pathogen to produce a detectable fluorescent signal. Biological pathogens that may be detected using this invention, include but are not limited to anthrax spores, bacillus anthracis, coliforms, crytosporidia, esherichia coli, legionella, listeria, salmonella, anthrax, similar organisms, and combinations thereof.

Returning to Fig. 1, each sensor probe 15 includes a fluorescence excitation source 50 positioned to shine energetic electromagnetic radiation onto the matrix/matrices 40, as well as a fluorescence detector 55 positioned to receive the electromagnetic radiation fluoresced from the matrix/matrices 40. The fluorescence excitation source is preferably one or more electromagnetic radiation sources adapted to provide electromagnetic radiation of great enough frequency or energy to the fluorophores on the sensor probe 15 to excite fluorescence therefrom. A single source 50 is preferred, although two or more sources may be combined as required. Excitation source(s) 50 is/are preferably monochromatic or substantially monochromatic in nature as may be provided by a laser, light emitting diode (LED), or such other device as would occur to those skilled in the art.

A fluorescent emission detector 55 is positioned to register the fluorescence response of each sensor 30 on a sensor probe 15. Each sensor 30 includes an emission detector 55 positioned directly adjacent the fluorophore/fluorophore forming matrix 40. Preferably, the matrix 40 is formed over the surface of the emission detector 55, and more preferably the matrix 40 is deposited onto the emission detector 55 as an even coating or thick film. Direct contact between the detector 55 and the fluorescent media 40 reduces signal attenuation through scattering, reabsorption, remission and the like and thereby greatly increases detector sensitivity. Further, by depositing the matrix of fluorescent-tagged organic material 40 directly onto the detector element 55 as a coating layer, the sensor probe 15 enjoys combined portability and increased sensitivity. Optionally, one or more filters 75 may be positioned between the matrix layer 40 and the detector element 55 to isolate the fluorescent radiation from the excitation radiation (i. e., the filter selectively blocks the high energy/high frequency radiation from the emission source 50 while passing the lower energy/lower frequency radiation fluoresced from the sensor probe 15). While the presence of a filter will reduce the intensity of the fluorescent signal to some extent, filters are especially useful if the frequency of the fluoresced signal is close to that of the excitation signal. Likewise, filters 75 may be used to isolate a first fluoresced signal from a first analyte from that of a second analyte having a similar characteristic frequency.

The detector element 50 may be a photodiode, phototransistor, charge coupled device (CCD) array, or such other type of device as would occur to those skilled in the art. Preferably, there is one sensor 30 (combining one detector 50 element and one associated matrix 40) for each sensor probe 15. However, in some alternative embodiments, each sensor probe 15 may host a number of sensors 30 and in other alternative embodiments each sensor 30 may include a plurality of matrix layers 40 (either intermixed or overlapping) formed on a single detector element 50, such that a number of analytes may be simultaneously measured. The wavelength sensitivity of the detector element 50 is preferably designed to match the fluorescence spectra of interest.

The use of photon detecting solid state devices such as photodiodes, phototransistors and CCD arrays allow accurate measurement of photons being emitted by the fluorescing media. CCD arrays are known in the art which can capture and count "wells" of photons numbering in the tens or hundreds of photons, thereby allowing the sensor of the present invention to achieve PPM or PPB accuracy levels.

Qualitative analysis is therefore achieved by the direct detection of a known fluorescent wavelength. Quantitative analysis may be achieved either by measurement of a total emission (amplitude) or by performing photon counts in a CCD grid (especially useful for measurement of biological samples).

For any appropriate arrangement of sensor array 35, one or more detection signals are provided by detector system 50 to signal processor 20. Processor 20 is responsive to the detection signals to execute one or more algorithms provided by appropriate hardware and software to gather and analyze relevant data. Processor 20 includes memory 60 to store data and instructions. Processor 60 also includes one or more input interfaces 65 for receiving operator input, and at least one output interface 70 for providing appropriate output to a user.

In one preferred mode of operation, sensor probe 15 is placed in contact with a solution containing one or more metal ions of interest. The analytes in solution preferably form complexes with one or more of the sensing materials 40 present. Excitation wavelengths $\lambda_E$ are transmitted to the matrix from the excitation source and stimulate the production of characteristic fluorescent emission wavelengths $\lambda_F$ therefrom. Some of the fluorescent emission wavelengths $\lambda_F$ travel from the matrix 40 to the detector 55 where they are transduced into characteristic patterns of electrical impulses. The electrical impulse patterns are transmitted to the microprocessor 20 for comparison to a plurality of patterns stored therein for identification and measurement of the analyte. In one preferred embodiment, the microprocessor 20 executes appropriate algorithms to determine the $\Delta F$ for each sensor 30 of interest based on data for the intensity in the absence of the one or more analytes of interest as stored in memory 60 (See formula (1)). For a given number of sensors n, processor 20 may be configured to establish a detection pattern from the detection signals, $\Delta F$ data, or such other fluorescence characteristic information representative of the array 35 responses as would occur to those skilled in the art. The detection pattern may be compared to a one or more known patterns of analyte responses stored in memory 60 or to test patterns from fluoresced test standards to generate qualitative data regarding the presence of a suspected analyte.

One or more output signals may be generated by processor 20 based on the outcome of one or more comparisons or corresponding comparison signals. In response, the output interface 70 outputs data to an operator regarding the qualitative or quantitative aspects of the solution composition. For example, output interface 70 may provide an indication such as a printout or graphical display estimating the metal ions present in the solution and/or the concentration of the metal ions.

Processor 20 may be comprised of digital circuitry, analog circuitry, or both. Also, processor 20 may be programmable, a dedicated state machine, or a hybrid combination of programmable and dedicated hardware. It is preferred that processor 20 include an integrated, solid-state central processing unit operatively coupled to one or more components comprising memory 60. It is also preferred that memory 60 contain programming to be executed by the processing unit and be arranged for reading and writing of data in accordance with the principals of the present invention.

Memory 60 may be comprised of one or more components of the volatile or nonvolatile variety. Further, memory 60 may additionally or alternatively be of the semiconductor, magnetic, or optical type; and may additionally or alternatively include removable media, such as magnetic or optical (CD ROM) disks, or one or more permanently installed memory components. Besides memory 60, it should be understood that processor 20 may also include any control clocks, interfaces, signal conditioners, filters, analog-to-digital (A/D) converters, digital-to-analog (D/A) converters, communication ports, or other types of components as are known to those skilled in the art; however, these components being generally known, are not shown to enhance clarity of FIG. 1. Similarly, various interfaces, optics, filters, amplifiers, and control elements of a conventional nature may be included as are known to those skilled in the art, but are not shown to preserve clarity.

Input devices 65 may be of a conventional variety such as a keyboard, mouse, voice command subsystem, global positioning system (GPS) or such other types as would occur to those skilled in the art. Output devices 70 preferably include a display of the liquid crystal display (LCD) or cathode ray tube (CRT) variety and a printer, although other conventional devices may alternatively or additionally be included.

In a preferred embodiment, the present invention may be used to test for water pollution. An operator can work his way along a water source, using the probe to sample for the analyte(s) of interest at regular intervals. Preferably, a GPS receiver is integrated with microprocessor 20 in order to record the location of each sample to record with the test results.

Signaling molecules used to produce a fluorescent signal when binding an analyte include but are not limited to: 2,2'-bipyridyl-3,3' -diol; 5,10,15,20-tetra (p-sulfonatophenyl) porphyrin: 5,10,15,20,-tetra (4-N-methyl-pyridyla)prophyrin; 4-2(thiazolylazo)resorcinol (TAR); 2,4-dinitrosoresorcinol (DNR); 1-nitroso-2-naphthol (NN); 4-(2-pyridylazo)resorcinol (PAR); and 1-(2-pyridyl-zao)-2-naphthol (PAN). See for example, Resch, U., and Rurack, K., "Steady-State and Time-Resolved Fluorometry of Fluorescent Pollutants and Heavy Metal Complexes," SPIE Vol. 3105, Prester H., et. al., "Detection of heavy metals in water by fluorescence spectroscopy: on the way to a suitable sensor system," Fresenius J. Anal. Chem. (2000) 368: 182-191.

In one preferred embodiment of the invention, a standard curve of fluorescent values measured as a function of the amount of standard in the mixture assayed is used to determine the amount of an analyte, or analytes, of interest in a sample comprising at least one analyte of interest. Briefly then, a compound of interest known to produce a detectable fluorescence signal under assay conditions of is used to prepare at least one mixture with a known amount of a compound of interest. To increase the accuracy and sensitivity of the assay, mixtures of compounds of interest and other molecules may be prepared and treated similarly, or identically, to the manner in which the sample containing the analyte of interest is prepared and treated. A device of the present invention is used to excite the mixtures and to detect the fluorescence intensity of the mixture at at least one wavelength of emission. Those skilled in the art will recognize that excitation and emission wavelengths are generally optimized to produce a fluorescent signal from the compound of interest with the highest signal to noise ratio possible under the assay conditions. However, it is also within the scope of the present invention to measure any reliable signal that correlates with the level of the compound of interest in the mixture. Fluorescence intensities can be measured at a plurality of excitation and emission wavelengths. Data can be collected from assays using different known amounts of the compound of interest in the assay. These data corresponding to various amounts of the compound of interest in the assay can be recorded and stored electronically in a look-up table as a function of the amount of the compound of interest used in the assay.

A look-up table correlating the amount of the compound of interest in the assay, with the measured wavelengths of excitation, emission, and fluorescence intensity may be stored electronically in for example a spreadsheet using a microprocessor. The assay may be repeated using the same device under the same assay conditions with different amounts of the compound of interest measured either singularly of in combination with other compounds of interest. The invention of the present invention can be used to measure the fluorescence intensity of a sample comprising an analyte, or analytes of interest, at the same wavelengths of excitation and emission used to construct the look-up table. These data used in combination with any statistical techniques known in the art, such as for example, least squares linear regression may be used to calculate the amount of the analytes of interest in the measured sample.

In still another embodiment of the invention, known amounts of the compound of interest maybe added to samples comprised of an analyte or analytes of interest. Fluorescent intensity may be measured at at least one emission wavelength, while the sample is excited at at least one wavelength. Fluorescence values can be measured with and without the addition of known amounts of standards. Differences between the fluorescence intensities measured in the presence and absence of the addition of known amounts of standards to the sample with the analyte of interest can be determined. The difference in fluorescence intensity measured with and without the addition of known amounts of standard can be used to calculate the amount of analyte of interest in the sample using statistical techniques known in the art such as linear regression analysis.

The matrix layer of the present invention must be thick enough to produce a reliable signal but not so thick as to reduce the intensity of the signal below the useful range for detection. The actual thickness of these layers depends on the strength of the signal detected, and the sensitivity of the detector over the range of excitation and emission energy used. In accordance, the thickness of the signal layer is preferably on the order of a few to several molecular layers thick, although thicker or thinner layers of material over or under the signaling layer are also within the scope and spirit of the present invention.

The device of the present invention may incorporate a filter or filters. For example, a filter or layer of filtering material may be positioned between the signaling layer and the detector to exclude energy that may interfere with detection and/or introduce additional noise into the measurements. A filter or filtering layer may be placed between the excitation source and the signaling layer to limit the influx of energy not necessary to excite the fluorophore. Ideally filters or filtering layers used anywhere in the device will not unduly reduce the sensitivity of the device.

While the invention has been illustrated and described in detail in the drawings and foregoing description, the same is to be considered as illustrative and not restrictive in character, it being understood that only the preferred embodiment has been shown and described and that all changes and modifications that come within the spirit of the invention are desired to be protected.

## Claims

1. An apparatus for measuring the presence of an analyte in a fluid, comprising:

   a light source adapted to shine an energetic beam of light;

a layer of fluorophore-tagged organic molecules configured to bind with at least one predetermined analyte to produce at least one organometallic fluorescent compound having at least one characteristic fluorescent wavelength;
a photodetector positioned adjacent the layer of fluorophore-tagged organic molecules; and
a microprocessor operationally connected to the light source and to the photodetector;

wherein exposure of the layer of fluorophore-tagged organic molecules to the analyte allows the formation of at least one organometallic fluorescent compound in the layer of fluorophore-tagged organic molecules;
wherein the beam of energetic light interacts with the at least one organometallic fluorescent compound to produce fluoresced light;
wherein a portion of the fluoresced light is received by the photodetector;
wherein the photodetector sends a photodetector signal to the microprocessor proportional to the fluoresced light received; and
wherein the microprocessor is adapted to calculate a concentration of analyte in layer of fluorophore-tagged organic molecules from the photodetector signal.

2. The apparatus of claim 1, wherein the analyte is a cation, selected from a group of cations having a valence state of $1^+$, $2^+$, $3^+$, $4^+$, $5^+$, $6^+$.

3. The apparatus of claim 1, wherein the analyte is a metal ion selected from a group of metal ions consisting of antimony, arsenic, barium, cadmium, chromium, copper, gold, lead, manganese, mercury, molybdenum, nickel, osmium, platinum, palladium, silver, selenium, thallium, titanium, tin, uranium, yttrium, zinc, zirconium, and combinations thereof.

4. An apparatus for sensing a number of analytes in solution, comprising:

a sensor layer including a plurality of different fluorophore-tagged organic molecules, the fluorophore-tagged organic molecules each having one of a plurality of different fluorescence responses to the analytes in solution;
an excitation light source operable to cause the fluorophores to fluoresce; and
a fluorescence detector positioned adjacent to the sensor layer and operable to detect the different fluorescence responses of each of the fluorophores to determine presence of the analytes when the sensor layer is placed in the solution and said excitation light source causes the fluorophores to fluoresce.

5. The apparatus of claim 4, further comprising a signal processor operatively coupled to the detector, the signal processor being operable to generate:

a detection pattern of signals from the different fluorescence responses;
at least one comparison signal representing a comparison of the detection pattern to a number of identification patterns stored in the processor; and
an output signal from the at least one comparison signal, the output signal representing at least one of the analytes.

6. The apparatus of claim 5, further comprising an output device responsive to the output signal to provide an indication of the presence of the at least one of the analytes.

7. The apparatus of claim 4, wherein the array is operatively coupled to the excitation light source and said detector by a number of optic fibers.

8. An apparatus for detecting a metal ion in solution, comprising:

a probe;
a sensor element connected to the probe and including a region of fluorophore-tagged molecules configured to combine with the metal ion to produce a fluorophore;
an excitation source connected to the probe and operable to provide excitation light to the sensor element to cause a corresponding fluorescence emission therefrom; and
a detector positioned adjacent the region of fluorophore-tagged molecules;

wherein the detector is responsive to said fluorescence emission to provide a detection signal corresponding to presence of the metal ion when the probe is placed in the solution and the fluorophore fluoresces in response to said excitation source.

9. The apparatus of claim 8, further comprising a signal processor operatively coupled to said detector, said processor being operable to generate:

at least one comparison signal representing a comparison of said detection signal to at least one identification signal stored in said processor; and
an output signal from said at least one comparison signal, said output signal representing the metal ion.

10. The apparatus of claim 9, further comprising an output device responsive to said output signal to provide an indication of the presence of the metal ion.

11. A method, comprising:

placing a first sensor in contact with a first analyte in solution, said first sensor including a first region of first fluorophore-tagged organic molecules, the first region of first fluorophore-tagged organic molecules associating with the analyte;
irradiating the first sensor after contact with the solution to generate a first fluorescence response; and
detecting the first fluorescence response corresponding to the presence of the first analyte.

12. The method of claim 11, further comprising the steps of:

placing a second sensor in contact with a second analyte in the solution, the second sensor including a second region of second fluorophore-tagged organic molecules, the second region of second fluorophore-tagged organic molecules associating with the second analyte;
irradiating the second sensor after contact with the solution to generate a second fluorescence response; and
detecting a second fluorescence response corresponding to the presence of the second analyte.

13. The method of claim 12, wherein the first region of first fluorophore-tagged organic molecules overlaps the second region of second fluorophore-tagged organic molecules.

14. The method of claim 11, further comprising the steps of:

placing a plurality of sensors in contact with a plurality of different analytes in the solution, each respective sensor including a respective region of different fluorophore-tagged organic molecules, each respective region of different fluorophore-tagged organic molecules associating with a different predetermined analyte;
irradiating the plurality of sensors during contact with the solution to generate a different predetermined fluorescence response; and
detecting a plurality of different fluorescence responses corresponding to the presence of the plurality of different analytes.

15. The method of claim 11, wherein the analyte is a metal ion selected from a group of metal ions, the group consisting of antimony, arsenic, barium, cadmium, chromium, mercury, lead, nickel, silver, selenium, thallium and combinations thereof.

16. The method of claim 11, wherein the analyte is an organism selected from a group of organisms, consisting of bacteria, mold, fungi, single celled eukaryotes, yeast, and combinations thereof.

17. The method of claim 11, wherein the analyte is a pathogen selected from a group of pathogens consisting of anthrax spores, bacillus anthracis, coliforms, crytosporidia, esherichia coli, legionella, listeria, salmonella, and combinations thereof.

18. The method of claim 11 wherein said irradiating includes exposing said first sensor to a first predetermined electromagnetic wavelength and said detecting includes determining an intensity of the fluorescence response at a second predetermined electromagnetic wavelength less energetic than the first light wavelength.

19. The method of claim 11 further comprising comparing the fluorescence response to a response expected in the absence of the analyte.

20. The method of claim 13 further comprising detecting a number of different fluorescence responses of different respective intensities, the respective intensities corresponding to a the amount of a respective different one of a plurality of different analytes in contact with the sensors.

21. An apparatus for measuring the presence of an analyte in a fluid, comprising:

a light source adapted to shine an energetic beam of light;
a surface configured to contact at least one fluorescence-tagged analyte to producing at least one fluorescent signal at, at least one characteristic fluorescent wavelength;
a photodetector positioned in contact with the opposite side of said surface; and
a microprocessor operationally connected to the light source and to the photodetector;

wherein exposure of said of said surface to at least one fluorophore-tagged organic molecules in the analyte allows the formation of at least one fluoresent signal from an organometallic fluorescent compound in contact with said surface;
wherein the beam of energetic light interacts with the at least one organometallic fluorescent compound to produce fluoresced light;
wherein a portion of the fluoresced light is received by the photodetector;
wherein the photodetector sends a photodetector signal to the microprocessor proportional to the fluoresced light received; and

wherein the microprocessor is adapted to calculate a concentration of analyte in layer of fluorophore-tagged organic molecules from the photodetector signal.

22. The apparatus of claim 21, wherein the analyte is a cation, selected from a group of cations having a valence state of $1^+$, $2^+$, $3^+$, $4^+$, $5^+$, $6^+$.

23. The apparatus of claim 21, wherein the analyte is a metal ion selected from a group of metal ions consisting of antimony, arsenic, barium, cadmium, chromium, copper, gold, lead, manganese, mercury, molybdenum, nickel, osmium, platinum, palladium, silver, selenium, thallium, titanium, tin, uranium, yttrium, zinc, zirconium, and'combinations thereof.

Fig. 1

Fig. 2

Fig. 3